# EUROPEAN PATENT SPECIFICATION

(11) **EP 2 714 328 B1**
(45) Date of publication and mention of the grant of the patent: **12.08.2015**
(21) Application number: 12725138.7
(22) Date of filing: 24.05.2012
(51) Int. Cl.: B24B 5/42, B24B 19/12, B23B 5/18, B23C 3/06, B23C 3/08

(54) **MACHINE TOOLS AND METHODS OF OPERATION THEREOF**
MASCHINENWERKZEUGE UND BETRIEBSVERFAHREN DAFÜR
MACHINES-OUTILS ET PROCÉDÉS DE FONCTIONNEMENT DE CELLES-CI

(30) Priority: 26.05.2011 GB 201108845; 15.07.2011 GB 201112165
(43) Date of publication of application: 09.04.2014
(73) Proprietor: Fives Landis Limited, Keighley BD20 7SD (GB)
(72) Inventor: GRIFFITHS, Selwyn Jonathan, Keighley Yorkshire BD20 7SD (GB); WENHAM, Richard Eade, Keighley Yorkshire BD20 7SD (GB); FALKNER, Dermot Robert, Keighley Yorkshire BD20 7SD (GB)
(74) Representative: Sharrock, Daniel John
(86) International application number: PCT/GB2012/051165
(87) International publication number: WO 2012/160379

(56) References cited:
- EP-A1- 2 052 812
- EP-A2- 1 297 926
- US-A- 5 289 660

## Description

### Field of the invention

The present invention relates to machine tools and control thereof. More particularly, it concerns co-ordination of the movement of a tool mount and a workpiece holder during a machining operation.

### Background to the invention

Historically, methods employed to finish grind the working surfaces of crankshaft crank pin diameters involved rotating the crank pin surfaces about their own centres. The machine tool was adjusted between each successive crank pin such that the grinding action on each pin was in the form of a cylindrical grind.

Methods were developed to cause grinding wheels to move orbitally following orbital motion of the respect crank pins about a longitudinal axis of a workpiece, as described for example in CA-A-364437.

More recently, machine tools have used Computer Numerical Control ("CNC") systems in which the position of the in-feed machine axis is electronically linked to the rotation of the workpiece under precise servo control. Such an approach is described in US4,375,670 which describes a machine tool including separate controllers for the drive means for rotating the crankshaft and the drive means for displacing a tool carriage. Both controllers are controlled such that irregularities of one movement cannot influence the other movement as one movement is not reliant on the other.

US5,289,660 concerns a method and apparatus for grinding a non-circular workpiece in which the velocity, acceleration and rate of acceleration change of a moving tool head and spindle are controlled to be equal or lower than a predetermined level. EP-A-1297926 relates to grinding workpiece surfaces to a finish which includes micro oil pockets.

EP-A-2052812 describes a grinding machine including a swivel head with a plurality of tool spindles thereon.

In existing techniques, a tool is brought into engagement with the workpiece whilst the workpiece is stationary at a defined point in its rotation. Once this start position has been reached, the tool and workpiece are driven simultaneously and in synchronism.

### Summary of the invention

The present invention is directed at a machine tool for machining a workpiece, comprising:
a machine base;
a workpiece holder supported by the machine base for holding a workpiece, the holder being rotatable about an axis;
a workpiece rotary drive for rotating the holder about the axis;
a tool mount supported by the machine base for carrying a tool to be engaged with a workpiece held in the holder;
a drive arrangement for moving the workpiece holder and the tool mount relative to each other in a plane which is transverse with respect to the axis, by moving at least one of the workpiece holder and the tool mount relative to the machine base; and
a control arrangement configured to control the workpiece rotary drive and the drive arrangement so as to carry out first and second discrete machining operations, wherein a surface profile is machined on the workpiece in the second machining operation which is non-equidistant from the axis in a plane which is transverse with respect to the axis,
the axis is a longitudinal axis of the machine tool, the tool mount is movable in a plane which is transverse with respect to the axis, the drive arrangement comprises a tool mount drive for imparting the transverse movement to the tool mount, and the control arrangement is configured to control the workpiece rotary drive and the tool mount drive so as to machine the surface profile on the workpiece.

According to the invention, a tool mounted in the mount and the workpiece are moved clear of each other by the drive arrangement after the first machining operation and then brought back into engagement to commence the second machining operation whilst the workpiece is being rotated continuously by the workpiece drive,
the control arrangement is configured to bring a tool carried by the tool mount into engagement with a workpiece held by the holder to commence the second machining operation when the point of contact on the workpiece is accelerating away from the tool mount, and
the control arrangement is configured to accelerate the tool mount towards the point of contact on the workpiece until the component of the velocity of the tool mount in a direction towards the point of contact is greater than the velocity of the workpiece in that direction, and then to decelerate the tool mount in that direction such that it matches the velocity and acceleration of the workpiece in that direction as it engages the workpiece.

According to another aspect of the invention, a tool mounted in the mount and the workpiece are moved clear of each other by the drive arrangement after the first machining operation and then brought back into engagement to commence the second machining operation whilst the workpiece is being rotated continuously by the workpiece drive,
the control arrangement is configured to bring a tool carried by the tool mount into engagement with a workpiece held by the holder to commence the second machining operation when the point of contact on the workpiece is accelerating towards the tool mount, and
the control arrangement is configured to decelerate the tool mount in a direction towards the point of contact, reverse the direction of movement of the tool mount and then accelerate the tool mount in a direction away from the point of contact such that it matches the velocity and acceleration of the workpiece in that direction as it engages the workpiece.

The ability to bring the tool into engagement with the workpiece whilst it is being rotated, even though the surface being machined is non-equidistant from (that is, non-circular with respect to) the axis about which it is rotating, significantly reduces the time taken to machine a workpiece when two or more discrete machining operations are required. It avoids the need to halt the rotation of the workpiece, thereby saving the time otherwise taken to decelerate the rotation of the workpiece to a standstill, bring the tool into engagement with it and then accelerate the workpiece and tool up to their normal machining velocities.

The surface profile being machined onto the workpiece is a profile which is intended to be non-equidistant from the workpiece holder's axis of rotation in the finished workpiece, that is, the desired finished surface is not a cylindrical surface centred on the holder's axis of rotation, but deviates significantly from such a surface.

For example, the surface being machined may be the surface of a crank pin orbiting around a crankshaft axis, or a cam lobe on a camshaft.

The machine tool is controlled such that the tool is engaged with a workpiece surface non-equidistant from the workpiece holder's axis of rotation, whilst the workpiece is being rotated (preferably maintaining a substantially constant workpiece rotation velocity) to machine the surface to a profile that is the desired surface finish for the workpiece part being machined, the profile being non-equidistant from the workpiece holder's axis of rotation.

The invention is also directed at a method of machining a workpiece with a machine tool in accordance with the invention, comprising the steps of:
rotating the workpiece about an axis;
moving one of the tool and the workpiece relative to the other in a plane which is transverse with respect to the axis so as to carry out first and second discrete machining operations, wherein a surface profile is machined on the workpiece in the second machining operation which is non-equidistant from the axis in the transverse plane.

According to the invention, the tool is clear of the workpiece after the first machining operation and the tool and the workpiece are then brought back into engagement to commence the second machining operation whilst the workpiece is rotating continuously,
wherein the tool is brought into engagement with the workpiece to commence the second machining operation when the point of contact on the workpiece is accelerating away from the tool mount,
by accelerating the tool towards the point of contact on the workpiece until the component of the velocity of the tool in a direction towards the point of contact is greater than the velocity of the workpiece in that direction, and then decelerating the tool in that direction such that it matches the velocity and acceleration of the workpiece in that direction as it engages the workpiece.

According to another aspect of the invention, the tool is clear of the workpiece after the first machining operation and the tool and the workpiece are then brought back into engagement to commence the second machining operation whilst the workpiece is rotating continuously,

wherein the tool is brought into engagement with the workpiece to commence the second machining operation when the point of contact on the workpiece is accelerating towards the tool mount,
by decelerating the tool in a direction towards the point of contact, reversing the direction of movement of the tool and then accelerating the tool in a direction away from the point of contact such that it matches the velocity and acceleration of the workpiece in that direction as it engages the workpiece.

According to embodiments of the invention, whilst the workpiece continues its rotation, the tool mount drive is controlled to bring the tool into engagement with the workpiece to commence a machining operation such that the velocities and accelerations of the respective contact points of the workpiece and tool are matched.

### Brief description of the drawings

Embodiments of the invention will now be described by way of example and with reference to the accompanying schematic drawings, wherein:
Figure 1 is a block diagram representing a control arrangement of a machine tool embodying the invention in combination with a workpiece and grinding wheel;
Figure 2 is a graph plotting work head rotation angle and in-feed axis position during a machining operation according to processes embodying the present invention; and
Figures 3 and 4 arc plots of work head rotation angle and in-feed axis position during a machining operation taken from the data log record of the CNC system controlling the machining operation, with Figure 4 representing part of the plot of Figure 3 in greater detail.

### Detailed description of the drawing

In the following embodiments, the workpiece holder is arranged to rotate the workpiece about a longitudinal axis of the machine tool, that is a reference axis which is held in a fixed position during machining relative to the machine base. The tool mount moves towards and away from this axis during the machining operation.

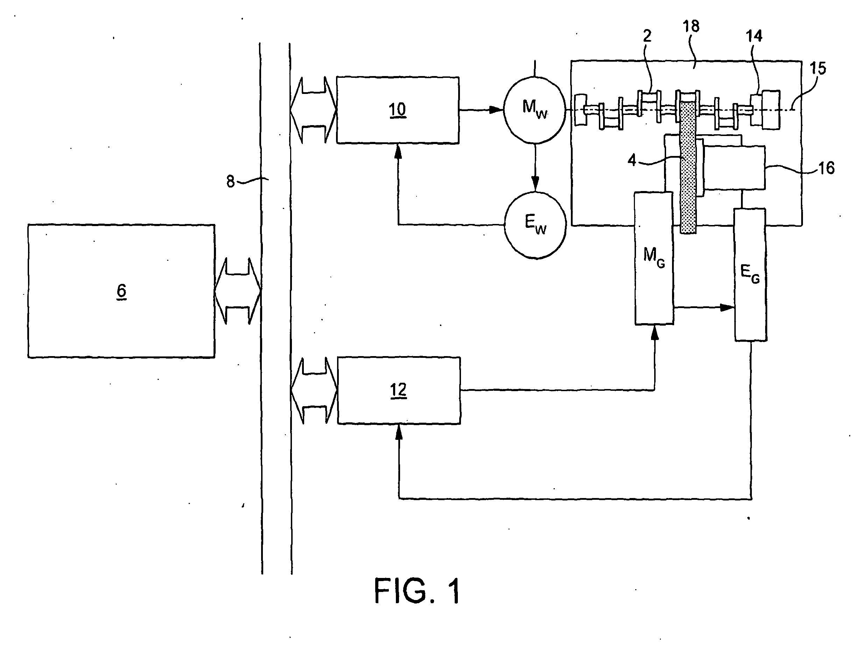

Figure 1 depicts components of a control arrangement embodying the invention which is arranged to machine a workpiece 2 with a grinding wheel 4. The workpiece is mounted in a workpiece holder 14 and the grinding wheel is carried by a tool mount in the form of a spindle head 16. The workpiece holder and spindle head are supported by a machine base 18 of a machine tool. The workpiece holder is rotatable about an axis 15.

A computer numerical control (CNC) system 6 is coupled to a workpiece drive and a tool mount drive via a digital drive control bus 8. The workpiece drive comprises a work head drive amplifier 10, a servo drive motor (Mw) and a workpiece position encoder (E_{W}).

The tool mount drive comprises an in-feed drive amplifier 12, a grinding wheel servo drive motor (M_{G}) and a grinding wheel position encoder (E_{G}).

The CNC system 6 performs calculations to generate control command parameters which are transmitted to the workpiece and tool mount drives via the drive control bus. The control bus 8, which could be any one of a SERCOS, Ethernet, Profidrive or similar configuration, delivers demand data packets and receives status data packets from the drives.

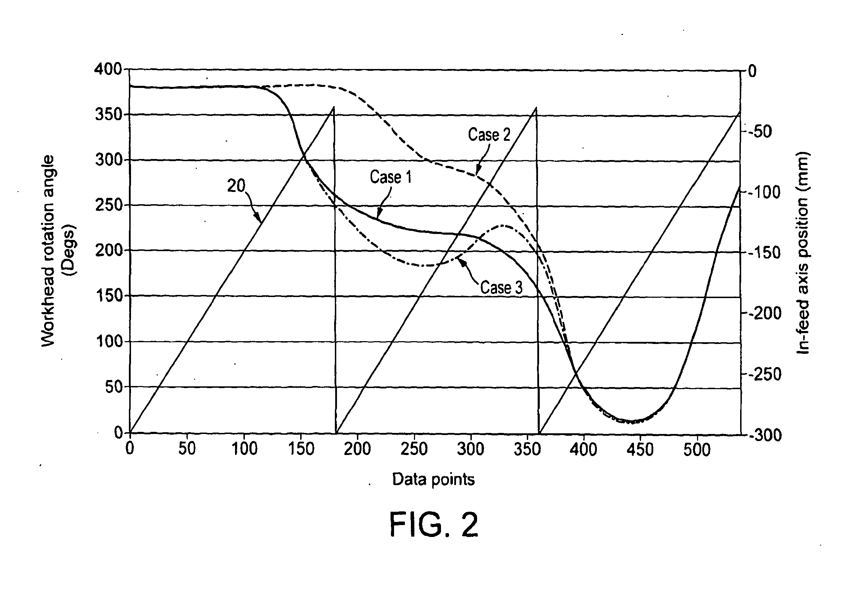

The work head drive amplifier 10 and in-feed drive amplifier 12 update their respective internal axis demand registers using the data received via the drive control bus 8. The servo drive motors M_{W}, M_{G} receive control signals from the respective drive amplifiers 10, 12 and impart corresponding motions to the workpiece 2 and grinding wheel 4; respectively. The position encoders Ew, E_{G} deliver position data back to the associated amplifiers. Servo control loops within the drive amplifiers perform any calculations necessary to stabilise the drive motors and minimise any errors between the received demands and the actual positions of the drive motors. Figure 2 is a synchronisation chart showing plots of work head rotation angle and in-feed axis position during machining processes embodying the present invention. The saw tooth plot 20 represents the work head rotation angle, indicating continuous rotation of the workpiece at a constant rotational velocity. The plots marked "Case I", "Case 2" and "Case 3" illustrate three different scenarios in which a tool is brought into contact with the workpiece at different points in the rotation of the workpiece.

In Case 1, the respective contact points of the tool and workpiece are brought into engagement at a point where their velocities along a direction of reciprocation of the tool is zero, at a point of reversal of the velocity of the workpiece along this direction. Immediately hollowing this engagement, the tool mount drive is synchronously constrained to match the motion of the workpiece.

When the point of contact of the workpiece is accelerating away from the tool, as in Case 2 which embodies the present invention, the tool mount drive is controlled to accelerate to a velocity greater than the linear velocity at the point of contact, until it is able to decelerate to a velocity where the tool contacts the moving workpiece at a calculated position, velocity and acceleration.

In Case 3, which also embodies the present invention, the workpiece is accelerating towards the tool at the point of contact. The tool mount drive is caused to decelerate, reverse direction and accelerate to a velocity and acceleration which matches the velocity of the point of contact of the workpiece. Synchronism is then maintained once the workpiece effectively catches up with the accelerating tool mount drive.

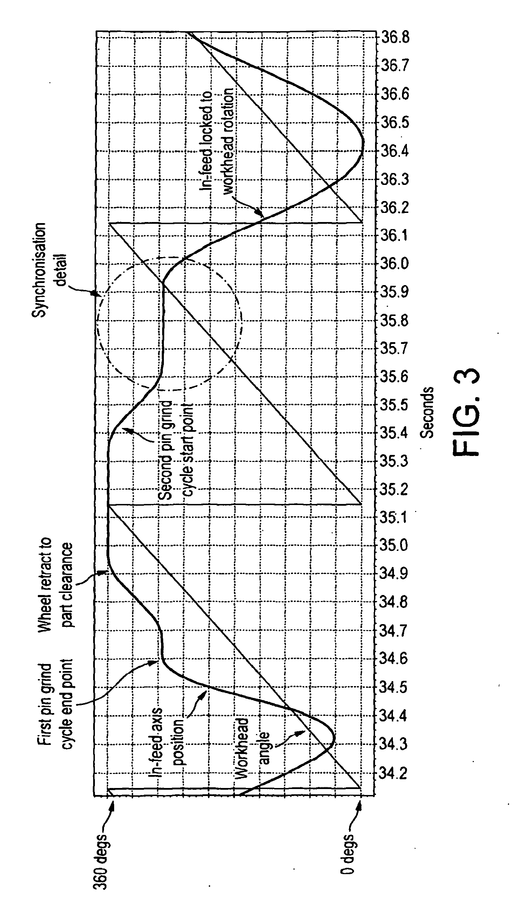

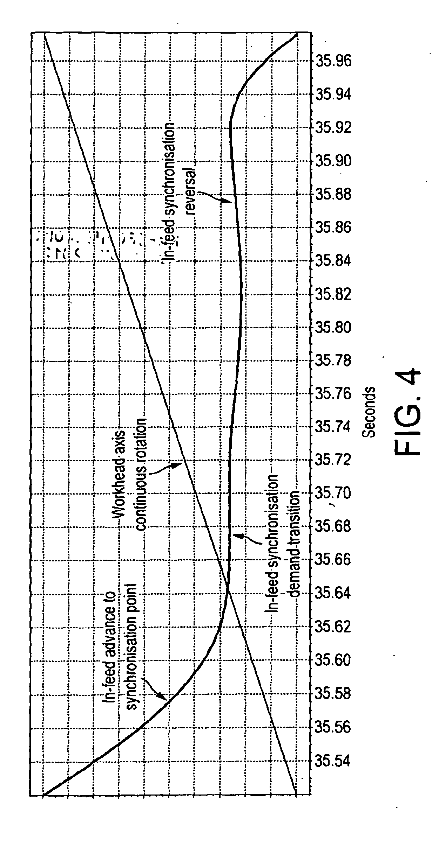

A recording of a machine cycle embodying the invention is shown in Figures 3 and 4. It was recorded using the data logging capability of a CNC control system. It corresponds to dynamic machine synchronisation in a section of a full crankshaft grinding cycle which lies between the end of the first crank pin grind cycle and the start of the subsequent, second crank pin grind cycle. It can be seen that the position of the in-feed axis undergoes a small reversal as it is brought into synchronisation with the workpiece, consistent with "Case 3" above. This portion of the machining operation is shown in greater detail in Figure 4.

## Claims

1. A machine tool for machining a workpiece (2), comprising:
a machine base (18);
a workpiece holder (14) supported by the machine base for holding a workpiece, the holder being rotatable about an axis (15);
a workpiece rotary drive (M_{W}) for rotating the holder about the axis;
a tool mount (16) supported by the machine base for carrying a tool (4) to be engaged with a workpiece held in the holder;
a drive arrangement for moving the workpiece holder and the tool mount relative to each other in a plane which is transverse with respect to the axis, by moving at least one of the workpiece holder and the tool mount relative to the machine base; and
a control arrangement (6) configured to control the workpiece rotary drive and the drive arrangement so as to carry out first and second discrete machining operations, wherein a surface profile is machined on the workpiece in the second machining operation which is non-equidistant from the axis in a plane which is transverse with respect to the axis,
wherein the axis is a longitudinal axis (15) of the machine tool, the tool mount (16) is movable in a plane which is transverse with respect to the axis, the drive arrangement comprises a tool mount drive for imparting the transverse movement to the tool mount, and the control arrangement (6) is configured to control the workpiece rotary drive (M_{W}) and the tool mount drive so as to machine the surface profile on the workpiece (2),
**characterised in that**
a tool mounted in the mount and the workpiece are moved clear of each other by the drive arrangement after the first machining operation and then brought back into engagement to commence the second machining operation whilst the workpiece is being rotated continuously by the workpiece drive,
the control arrangement (6) is configured to bring a tool (4) carried by the tool mount (16) into engagement with a workpiece (2) held by the holder (14) to commence the second machining operation when the point of contact on the workpiece is accelerating away from the tool mount, and
the control arrangement (6) is configured to accelerate the tool mount (16) towards the point of contact on the workpiece (2) until the component of the velocity of the tool mount in a direction towards the point of contact is greater than the velocity of the workpiece **in that** direction, and then to decelerate the tool mount **in that** direction such that it matches the velocity and acceleration of the workpiece **in that** direction as it engages the workpiece.

2. A machine tool for machining a workpiece (2), comprising:
a machine base (18);
a workpiece holder (14) supported by the machine base for holding a workpiece, the holder being rotatable about an axis (15);
a workpiece rotary drive (M_{W}) for rotating the holder about the axis;
a tool mount (16) supported by the machine base for carrying a tool (4) to be engaged with a workpiece held in the holder;
a drive arrangement for moving the workpiece holder and the tool mount relative to each other in a plane which is transverse with respect to the axis, by moving at least one of the workpiece holder and the tool mount relative to the machine base; and
a control arrangement (6) configured to control the workpiece rotary drive and the drive arrangement so as to carry out first and second discrete machining operations, wherein a surface profile is machined on the workpiece in the second machining operation which is non-equidistant from the axis in a plane which is transverse with respect to the axis,
wherein the axis is a longitudinal axis (15) of the machine tool, the tool mount (16) is movable in a plane which is transverse with respect to the axis, the drive arrangement comprises a tool mount drive for imparting the transverse movement to the tool mount, and the control arrangement (6) is configured to control the workpiece rotary drive (Mw) and the tool mount drive so as to machine the surface profile on the workpiece (2),
**characterised in that**
a tool mounted in the mount and the workpiece are moved clear of each other by the drive arrangement after the first machining operation and then brought back into engagement to commence the second machining operation whilst the workpiece is being rotated continuously by the workpiece drive,
the control arrangement (6) is configured to bring a tool (4) carried by the tool mount (16) into engagement with a workpiece (2) held by the holder to commence the second machining operation when the point of contact on the workpiece is accelerating towards the tool mount, and
the control arrangement (6) is configured to decelerate the tool mount (16) in a direction towards the point of contact, reverse the direction of movement of the tool mount and then accelerate the tool mount in a direction away from the point of contact such that it matches the velocity and acceleration of the workpiece (2) **in that** direction as it engages the workpiece.

3. A machine tool of claim 1 or claim 2, wherein the control arrangement is configured to machine a crank pin of a crankshaft held by the workpiece holder (14), the crank pin orbiting the axis (15) as the crankshaft is rotated by the workpiece holder.

4. A machine tool of any preceding claim, wherein each drive comprises a controller, a drive motor (M_{W}, M_{G}), and a position encoder (E_{W}, E_{G}), with each position encoder being configured to feed back to the respective controller signals corresponding to the measured position of the workpiece holder (14) and tool mount (16), respectively.

5. A machine tool of any preceding claim, wherein the tool mount (16) is arranged to carry a grinding wheel (14).

6. A machine tool of any preceding claim, wherein the tool mount (16) is arranged to move along a linear reference axis.

7. A machine tool of any preceding claim, wherein the tool mount is carried by a support arm, with the support arm mounted for rotation about an axis parallel to the longitudinal axis of the machine tool, and the tool mount spaced from the rotational axis of the support arm.

8. A method of machining a workpiece with a machine tool of claim 1 or any of claims 3 to 7 when directly or indirectly dependent on claim 1, comprising the steps of:
rotating the workpiece (2) about an axis (15);
moving one of the tool (4) and the workpiece (2) relative to the other in a plane transverse with respect to the axis so as to carry out first and second discrete machining operations, wherein a surface profile is machined on the workpiece in the second machining operation which is non-equidistant from the axis in the transverse plane,
wherein the tool is clear of the workpiece after the first machining operation and the tool and the workpiece are then brought back into engagement to commence the second machining operation whilst the workpiece is rotating continuously, and
the tool (4) is brought intro engagement with the workpiece (2) to commence the second machining operation when the point of contact on the workpiece is accelerating away from the tool mount,
by accelerating the tool (4) towards the point of contact on the workpiece (2) until the component of the velocity of the tool in a direction towards the point of contact is greater than the velocity of the workpiece in that direction, and then decelerating the tool in that direction such that it matches the velocity and acceleration of the workpiece in that direction as it engages the workpiece.

9. A method of machining a workpiece with a machine tool of claim 2 or any of claims 3 to 7 when directly or indirectly dependent on claim 2, comprising the steps of:
rotating the workpiece (2) about an axis (15);
moving one of the tool (4) and the workpiece (2) relative to the other in a plane which is transverse with respect to the axis so as to carry out first and second discrete machining operations, wherein a surface profile is machined on the workpiece in the second machining operation which is non-equidistant from the axis in the transverse plane,
wherein the tool is clear of the workpiece after the first machining operation and the tool and the workpiece are then brought back into engagement to commence the second machining operation whilst the workpiece is rotating continuously, and
the tool (4) is brought into engagement with the workpiece (2) to commence the second machining operation when the point of contact on the workpiece is accelerating towards the tool mount,
by decelerating the tool (4) in a direction towards the point of contact, reversing the direction of movement of the tool and then accelerating the tool in a direction away from the point of contact such that it matches the velocity and acceleration of the workpiece (2) in that direction as it engages the workpiece.

## Patentansprüche

1. Maschinenwerkzeug zum Bearbeiten eines Werkstücks (2), umfassend:
eine Maschinenbasis (18);
einen Werkstückhalter (14), der von der Maschinenbasis zum Halten eines Werkstücks gehalten wird, wobei der Halter um eine Achse (15) drehbar ist;
ein Werkstück-Drehantrieb (M_{W}) zum Drehen des Halters um die Achse; eine Werkzeughalterung (16), die von der Maschinenbasis zum Tragen eines Werkzeugs (4) abgestützt wird, das mit einem Werkstück, das in dem Halter gehalten wird, in Eingriff gebracht werden soll;
eine Antriebsanordnung zum Bewegen des Werkstückhalters und der Werkzeughalterung in Bezug aufeinander in einer Ebene, die quer bezüglich der Achse verläuft, wobei mindestens der Werkzeughalter oder die Werkzeughalterung in Bezug auf die Maschinenbasis bewegt werden; und
eine Steueranordnung (6), die zum Steuern des Werkstück-Drehantriebs und der Antriebsanordnung konfiguriert ist, um erste und zweite diskrete Maschinenbearbeitungsoperationen durchzuführen, wobei ein Oberflächenprofil auf das Werkstück in der zweiten Maschinenbearbeitungsoperation maschinell gearbeitet wird, das nicht im gleichen Abstand von der Achse auf einer Ebene liegt, die quer zu der Achse verläuft,
wobei die Achse eine Längsachse (15) des Maschinenwerkzeugs ist, wobei die Werkzeughalterung (16) in einer Ebene beweglich ist, die quer zu der Achse verläuft, wobei die Antriebsanordnung einen Werkzeughalterungsantrieb zum Ausüben einer Querbewegung zu der Werkzeughalterung umfasst und die Steueranordnung (6) zum Steuern des Werkstück-Drehantriebs (M_{W}) und des Werkzeughalterungsantriebs konfiguriert ist, um das Oberflächenprofil auf dem Werkstück (2) maschinell zu bearbeiten,
**dadurch gekennzeichnet, dass**
ein Werkzeug, das in der Halterung befestigt ist, und das Werkstück im Abstand von der Antriebsanordnung nach der ersten Bearbeitungsoperation bewegt werden kann und dann zurück in Eingriff gebracht wird, um die zweite Bearbeitungsoperation einzuleiten, während das Werkstück durchgehend von dem Werkstückantrieb gedreht wird,
wobei die Steueranordnung (6) zum Ineingriffbringen eines Werkzeugs (4), das von der Werkzeughalterung (16) abgestützt wird, mit einem Werkstück (2), das von dem Halter (14) gehalten wird, konfiguriert ist, um die zweite Bearbeitungsoperation einzuleiten, wenn sich die Kontaktstelle auf dem Werkstück weg von der Werkzeughalterung beschleunigt, und
wobei die Steueranordnung (6) zum Beschleunigen der Werkzeughalterung (16) zu der Kontaktstelle auf dem Werkstück (2) konfiguriert ist, bis die Komponente der Geschwindigkeit der Werkzeughalterung in eine Richtung zur Kontaktstelle hin größer als die Geschwindigkeit des Werkstücks in diese Richtung ist, wobei danach die Werkzeughalterung in diese Richtung abgebremst wird, sodass diese mit der Geschwindigkeit und der Beschleunigung des Werkstücks in diese Richtung übereinstimmt, wenn sie mit dem Werkstück in Eingriff gebracht wird.

2. Maschinenwerkzeug zum Bearbeiten eines Werkstücks (2), umfassend:
eine Maschinenbasis (18);
einen Werkstückhalter (14), der von der Maschinenbasis zum Halten eines Werkstücks gehalten wird, wobei der Halter um eine Achse (15) drehbar ist;
ein Werkstück-Drehantrieb (M_{W}) zum Drehen des Halters um die Achse; eine Werkzeughalterung (16), die von der Maschinenbasis zum Tragen eines Werkzeugs (4) abgestützt wird, das mit einem Werkstück, das in dem Halter gehalten wird, in Eingriff gebracht werden soll;
eine Antriebsanordnung zum Bewegen des Werkstückhalters und der Werkzeughalterung in Bezug aufeinander in einer Ebene, die quer bezüglich der Achse verläuft, wobei mindestens der Werkzeughalter oder die Werkzeughalterung in Bezug auf die Maschinenbasis bewegt werden; und
eine Steueranordnung (6), die zum Steuern des Werkstück-Drehantriebs und der Antriebsanordnung konfiguriert ist, um erste und zweite diskrete Maschinenbearbeitungsoperationen durchzuführen, wobei ein Oberflächenprofil auf dem Werkstück in der zweiten Maschinenbearbeitungsoperation bearbeitet wird, die nicht im gleichen Abstand von der Achse auf einer Ebene befindlich ist, die quer zu der Achse verläuft,
wobei die Achse eine Längsachse (15) des Maschinenwerkzeugs ist, wobei die Werkzeughalterung (16) in einer Ebene beweglich ist, die quer zu der Achse verläuft, wobei die Antriebsanordnung einen Werkzeughalterungsantrieb zum Ausüben einer Querbewegung zu der Werkzeughalterung umfasst und die Steueranordnung (6) zum Steuern des Werkstück-Drehantriebs (M_{W}) und des Werkzeughalterungsantriebs konfiguriert ist, um das Oberflächenprofil auf dem Werkstück (2) maschinell zu bearbeiten,
**dadurch gekennzeichnet, dass**
ein Werkzeug, das in der Halterung befestigt ist, und das Werkstück im Abstand von der Antriebsanordnung nach der ersten Bearbeitungsoperation bewegt werden kann und dann zurück in Eingriff gebracht wird, um die zweite Bearbeitungsoperation einzuleiten, während das Werkstück durchgehend von dem Werkstückantrieb gedreht wird,
wobei die Steueranordnung (6) zum Ineingriffbringen eines Werkzeugs (4), das von der Werkzeughalterung (16) abgestützt wird, mit einem Werkstück (2), das von dem Halter gehalten wird, konfiguriert ist, um die zweite Bearbeitungsoperation einzuleiten, wenn sich die Kontaktstelle auf dem Werkstück zu der Werkzeughalterung hin beschleunigt, und
wobei die Steueranordnung (6) zum Abbremsen der Werkzeughalterung (16) in eine Richtung zu der Kontaktstelle entgegengesetzt zu der Bewegungsrichtung der Werkzeughalterung konfiguriert ist und dann die Werkzeughalterung in eine Richtung weg von der Kontaktstelle beschleunigt, sodass diese mit der Geschwindigkeit und der Beschleunigung des Werkstücks (2) in diese Richtung übereinstimmt, wenn sie mit dem Werkstück in Eingriff gebracht wird.

3. Maschinenwerkzeug nach Anspruch 1 oder 2, wobei die Steueranordnung zum maschinellen Bearbeiten eines Kurbelzapfens einer Kurbelwelle konfiguriert ist, der von dem Werkstückhalter (14) gehalten wird, wobei der Kurbelzapfen um die Achse (15) kreist, während die Kurbelwelle von dem Werkstückhalter gedreht wird.

4. Maschinenwerkzeug nach einem der vorherigen Ansprüche, wobei jeder Antrieb eine Steuerung, einen Antriebsmotor (M_{W}, M_{G}) und einen Positionscodierer (E_{W}, E_{G}) umfasst, wobei jeder Positionscodierer zum Rückkoppeln der zugehörigen Steuersignale der gemessenen Position des Werkstückhalters (14) bzw. der Werkzeughalterung (16) konfiguriert ist.

5. Maschinenwerkzeug nach einem der vorherigen Ansprüche, wobei die Werkzeughalterung (16) zum Tragen eines Schleifrades (14) angeordnet ist.

6. Maschinenwerkzeug nach einem der vorherigen Ansprüche, wobei die Werkzeughalterung (16) zum Bewegen entlang einer linearen Referenzachse angeordnet ist.

7. Maschinenwerkzeug nach einem der vorherigen Ansprüche, wobei die Werkzeughalterung von einem Stützträger getragen wird, wobei der Stützträger zur Drehung um eine Achse parallel zu der Längsachse des Maschinenwerkzeugs befestigt ist und die Werkzeughalterung beabstandet von der Drehachse des Stützarms angeordnet ist.

8. Verfahren zum maschinellen Bearbeiten eines Werkstücks mit einem Maschinenwerkzeug nach Anspruch 1 oder nach einem der Ansprüche 3 bis 7, wenn direkt oder indirekt abhängig von Anspruch 1, umfassend die Schritte:
Drehen des Werkstücks (2) um eine Achse (15);
Bewegen entweder des Werkzeugs (4) oder des Werkstücks (2) zueinander in einer Ebene, die quer in Bezug auf die Achse verläuft, um erste und zweite diskrete Maschinenbearbeitungsoperationen durchzuführen, wobei ein Oberflächenprofil des Werkstücks in der zweiten Maschinenbearbeitungsoperation maschinell bearbeitet wird und sich nicht im gleichen Abstand von der Achse in der Querebene befindet,
wobei das Werkzeug von dem Werkstück nach der ersten Maschinenbearbeitungsoperation beabstandet ist und das Werkzeug und das Werkstück dann erneut in Eingriff gebracht werden, um die zweite Maschinenbearbeitungsoperation einzuleiten, während sich das Werkstück durchgehend dreht, und
das Werkzeug (4) in Eingriff mit dem Werkstück (2) gebracht wird, um die zweite Maschinenbearbeitungsoperation einzuleiten, wenn sich die Kontaktstelle auf dem Werkstück weg von der Werkzeughalterung beschleunigt,
indem das Werkzeug (4) zu der Kontaktstelle auf dem Werkstück (2) beschleunigt wird, bis die Komponente der Geschwindigkeit des Werkzeugs in eine Richtung zur Kontaktstelle hin größer als die Geschwindigkeit des Werkstücks in diese Richtung ist, wobei danach das Werkzeug in diese Richtung abgebremst wird, sodass diese mit der Geschwindigkeit und der Beschleunigung des Werkstücks in diese Richtung übereinstimmt, während es mit dem Werkstück in Eingriff gebracht wird.

9. Verfahren zum maschinellen Bearbeiten eines Werkstücks mit einem Maschinenwerkzeug nach Anspruch 2 oder nach einem der Ansprüche 3 bis 7, wenn direkt oder indirekt abhängig von Anspruch 2, umfassend die Schritte:
Drehen des Werkstücks (2) um eine Achse (15);
Bewegen entweder des Werkzeugs (4) oder des Werkstücks (2) zueinander in einer Ebene, die quer in Bezug auf die Achse verläuft, um erste und zweite diskrete Maschinenbearbeitungsoperationen durchzuführen, wobei ein Oberflächenprofil des Werkstücks in der zweiten Maschinenbearbeitungsoperation maschinell bearbeitet wird und sich in der Querebene nicht im gleichen Abstand von der Achse befindet,
wobei das Werkzeug von dem Werkstück nach der ersten Maschinenbearbeitungsoperation beabstandet ist und das Werkzeug und das Werkstück dann erneut in Eingriff gebracht werden, um die zweite Maschinenbearbeitungsoperation einzuleiten, während sich das Werkstück durchgehend dreht, und
das Werkzeug (4) in Eingriff mit dem Werkstück (2) gebracht wird, um die zweite Maschinenbearbeitungsoperation einzuleiten, wenn sich die Kontaktstelle auf dem Werkstück zu der Werkzeughalterung beschleunigt,
durch Abbremsen des Werkzeugs (4) in eine Richtung zu der Kontaktstelle entgegengesetzt zu der Bewegungsrichtung des Werkzeugs und dann Beschleunigen des Werkzeugs in eine Richtung weg von der Kontaktstelle, sodass diese mit der Geschwindigkeit und der Beschleunigung des Werkstücks (2) in diese Richtung übereinstimmt, während es mit dem Werkstück in Eingriff gebracht wird.

## Revendications

1. Machine-outil pour usiner une pièce (2), comprenant:
une base de machine (18);
un support de pièce (14) supporté par la base de machine pour supporter une pièce, le support étant rotatif autour d'un axe (15);
une commande de rotation de pièce (M_{W}) pour faire tourner le support autour de l'axe;
une monture d'outil (16) supportée par la base de machine pour porter un outil (4) à engager avec une pièce maintenue dans le support;
un agencement d'entraînement pour déplacer le support de pièce et la monture d'outil l'un par rapport à l'autre dans un plan qui est transversal par rapport à l'axe, en déplaçant au moins soit le support de pièce soit la monture d'outil par rapport à la base de machine; et
un agencement de commande (6) configuré pour commander la commande de rotation de pièce et l'agencement d'entraînement de manière à exécuter des première et deuxième opérations d'usinage discrètes, dans laquelle un profil de surface est usiné sur la pièce lors de la deuxième opération d'usinage qui est non équidistant de l'axe dans un plan qui est transversal par rapport à l'axe,
dans laquelle l'axe est un axe longitudinal (15) de la machine-outil, la monture d'outil (16) est mobile dans un plan qui est transversal par rapport à l'axe, l'agencement d'entraînement comprend une commande de monture d'outil pour imprimer le mouvement transversal à la monture d'outil, et l'agencement de commande (6) est configuré pour commander la commande de rotation de pièce (M_{W}) et la commande de monture d'outil de manière à usiner le profil de surface sur la pièce (2),
**caractérisée en ce que**:
un outil monté dans la monture et la pièce sont déplacés à l'écart l'un de l'autre par l'agencement d'entraînement après la première opération d'usinage, et sont ensuite ramenés en engagement afin de commencer la deuxième opération d'usinage pendant que la pièce est mise en rotation de façon continue par la commande de rotation de pièce,
l'agencement de commande (6) est configuré pour amener un outil (4) porté par la monture d'outil (16) en engagement avec une pièce (2) maintenue par le support (14) afin de commencer la deuxième opération d'usinage lorsque le point de contact sur la pièce accélère en s'éloignant de la monture d'outil, et
l'agencement de commande (6) est configuré pour accélérer la monture d'outil (16) en direction du point de contact sur la pièce (2) jusqu'à ce que la composante de la vitesse de la monture d'outil dans une direction vers le point de contact soit supérieure à la vitesse de la pièce dans cette direction, et ensuite pour décélérer la monture d'outil dans cette direction de telle sorte qu'il corresponde à la vitesse et à l'accélération de la pièce dans cette direction lorsqu'il engage la pièce.

2. Machine-outil pour usiner une pièce (2), comprenant:
une base de machine (18);
un support de pièce (14) supporté par la base de machine pour supporter une pièce, le support étant rotatif autour d'un axe (15);
une commande de rotation de pièce (M_{W}) pour faire tourner le support autour de l'axe;
une monture d'outil (16) supportée par la base de machine pour porter un outil (4) à engager avec une pièce maintenue dans le support;
un agencement d'entraînement pour déplacer le support de pièce et la monture d'outil l'un par rapport à l'autre dans un plan qui est transversal par rapport à l'axe, en déplaçant au moins soit le support de pièce soit la monture d'outil par rapport à la base de machine; et
un agencement de commande (6) configuré pour commander la commande de rotation de pièce et l'agencement d'entraînement de manière à exécuter des première et deuxième opérations d'usinage discrètes, dans laquelle un profil de surface est usiné sur la pièce lors de la deuxième opération d'usinage qui est non équidistant de l'axe dans un plan qui est transversal par rapport à l'axe,
dans laquelle l'axe est un axe longitudinal (15) de la machine-outil, la monture d'outil (16) est mobile dans un plan qui est transversal par rapport à l'axe, l'agencement d'entraînement comprend une commande de monture d'outil pour imprimer le mouvement transversal à la monture d'outil, et l'agencement de commande (6) est configuré pour commander la commande de rotation de pièce (M_{W}) et la commande de monture d'outil de manière à usiner le profil de surface sur la pièce (2),
**caractérisée en ce que**:
un outil monté dans la monture et la pièce sont déplacés à l'écart l'un de l'autre par l'agencement d'entraînement après la première opération d'usinage, et sont ensuite ramenés en engagement afin de commencer la deuxième opération d'usinage pendant que la pièce est mise en rotation de façon continue par la commande de rotation de pièce,
l'agencement de commande (6) est configuré pour amener un outil (4) porté par la monture d'outil (16) en engagement avec une pièce (2) maintenue par le support afin de commencer la deuxième opération d'usinage lorsque le point de contact sur la pièce accélère en direction de la monture d'outil, et
l'agencement de commande (6) est configuré pour décélérer la monture d'outil (16) dans une direction vers le point de contact, inverser la direction de déplacement de la monture d'outil et accélérer ensuite la monture d'outil dans une direction qui l'éloigne du point de contact de telle sorte qu'elle corresponde à la vitesse et à l'accélération de la pièce (2) dans cette direction lorsqu'elle engage la pièce.

3. Machine-outil selon la revendication 1 ou la revendication 2, dans laquelle l'agencement de commande est configuré pour usiner un maneton d'un vilebrequin maintenu par le support de pièce (14), le maneton étant en orbite autour de l'axe (15) lorsque le vilebrequin est mis en rotation par le support de pièce.

4. Machine-outil selon l'une quelconque des revendications précédentes, dans laquelle chaque commande comprend un dispositif de commande, un moteur d'entraînement (M_{W}, M_{G}), et un codeur de position (E_{W}, E_{G}), chaque codeur de position étant configuré pour renvoyer au dispositif de commande respectif des signaux correspondant à la position mesurée du support de pièce (14) et de la monture d'outil (16), respectivement.

5. Machine-outil selon l'une quelconque des revendications précédentes, dans laquelle la monture d'outil (16) est agencée pour porter une meule (14).

6. Machine-outil selon l'une quelconque des revendications précédentes, dans laquelle la monture d'outil (16) est agencée de manière à se déplacer le long d'un axe de référence linéaire.

7. Machine-outil selon l'une quelconque des revendications précédentes, dans laquelle la monture d'outil est portée par un bras de support, le bras de support étant monté de manière à tourner autour d'un axe parallèle à l'axe longitudinal de la machine-outil, et la monture d'outil étant espacée de l'axe de rotation du bras de support.

8. Procédé pour usiner une pièce avec une machine-outil selon la revendication 1 ou selon l'une quelconque des revendications 3 à 7 lorsqu'elle dépend directement ou indirectement de la revendication 1, comprenant les étapes suivantes:
faire tourner la pièce (2) autour d'un axe (15);
déplacer soit l'outil (4) soit la pièce (2) par rapport à l'autre dans un plan transversal par rapport à l'axe de manière à exécuter des première et deuxième opérations d'usinage discrètes, dans lequel un profil de surface est usiné sur la pièce lors de la deuxième opération d'usinage qui est non équidistant de l'axe dans le plan transversal,
dans lequel l'outil est éloigné de la pièce après la première opération d'usinage et l'outil et la pièce sont ensuite ramenés en engagement afin de commencer la deuxième opération d'usinage pendant que la pièce tourne de façon continue; et
l'outil (4) est amené en engagement avec la pièce (2) afin de commencer la deuxième opération d'usinage lorsque le point de contact sur la pièce accélère en s'éloignant de la monture d'outil,
accélérer l'outil (4) en direction du point de contact sur la pièce (2) jusqu'à ce que la composante de la vitesse de l'outil dans une direction vers le point de contact soit supérieure à la vitesse de la pièce dans cette direction, et décélérer ensuite l'outil dans cette direction de telle sorte qu'il corresponde à la vitesse et à l'accélération de la pièce dans cette direction lorsqu'il engage la pièce.

9. Procédé pour usiner une pièce avec une machine-outil selon la revendication 2 ou selon l'une quelconque des revendications 3 à 7 lorsqu'elle dépend directement ou indirectement de la revendication 2, comprenant les étapes suivantes:
faire tourner la pièce (2) autour d'un axe (15);
déplacer soit l'outil (4) soit la pièce (2) par rapport à l'autre dans un plan qui est transversal par rapport à l'axe de manière à exécuter des première et deuxième opérations d'usinage discrètes, dans lequel un profil de surface est usiné sur la pièce lors de la deuxième opération d'usinage qui est non équidistant de l'axe dans le plan transversal,
dans lequel l'outil est éloigné de la pièce après la première opération d'usinage et l'outil et la pièce sont ensuite ramenés en engagement afin de commencer la deuxième opération d'usinage pendant que la pièce tourne de façon continue; et
l'outil (4) est amené en engagement avec la pièce (2) afin de commencer la deuxième opération d'usinage lorsque le point de contact sur la pièce accélère en direction de la monture d'outil,
décélérer l'outil (4) dans une direction vers le point de contact, inverser la direction de déplacement de l'outil et accélérer ensuite l'outil dans une direction qui l'éloigne du point de contact de telle sorte qu'il corresponde à la vitesse et à l'accélération de la pièce (2) dans cette direction lorsqu'il engage la pièce.
